# EUROPÄISCHE PATENTSCHRIFT

(11) **EP 2 583 266 B1**
(45) Veröffentlichungstag und Bekanntmachung des Hinweises auf die Patenterteilung: **13.03.2019**
(21) Anmeldenummer: 11782530.7
(22) Anmeldetag: 16.06.2011
(51) Int. Cl.: G09B 21/00

(54) **BEDIENEINRICHTUNG MIT EINER MEHRZAHL VON NEBEN- UND/ODER UNTEREINANDER ANGEORDNETEN BETÄTIGUNGSELEMENTEN**
OPERATING DEVICE WITH A PLURALITY OF ACTUATING ELEMENTS ARRANGED NEXT TO AND/OR BELOW ONE ANOTHER
DISPOSITIF D'ACTIONNEMENT COMPORTANT UNE PLURALITÉ D'ÉLÉMENTS D'ACTIONNEMENT DISPOSÉS LES UNS À CÔTÉ DES AUTRES ET/OU LES UNS AU-DESSUS DES AUTRES

(30) Priorität: 18.06.2010 DE 102010024345
(43) Veröffentlichungstag der Anmeldung: 24.04.2013
(73) Patentinhaber: Airbus Defence and Space GmbH, 85521 Ottobrunn (DE)
(72) Erfinder: KELLERER, Johannes, 84048 Mainburg (DE); RITZER, Josef, 94157 Perlesreut (DE)
(74) Vertreter: Schicker, Silvia
(86) Internationale Anmeldenummer: PCT/DE2011/001344
(87) Internationale Veröffentlichungsnummer: WO 2012/022281

(56) Entgegenhaltungen:
- WO-A2-2009/047437
- DE-A1- 3 530 971
- JP-A- 11 095 654
- US-B1- 6 655 581

## Beschreibung

Die vorliegende Erfindung betrifft eine Bedieneinrichtung mit einer Mehrzahl von neben- und/oder untereinander angeordneten Betätigungselementen, insbesondere Schaltern und/oder Tastern. Eine derartige Bedieneinrichtung ist zum Einsatz in einer Armaturentafel eines Fahrzeugs vorgesehen. Sie betrifft weiterhin eine solche Bedieneinrichtung mit einem berührungsempfindlichen Bildschirm.

Sind derartige Betätigungselemente auf einer Bedieneinrichtung angeordnet, die in Relation zur Bedienperson starken Erschütterungen oder anderen Relativbewegungen ausgesetzt ist, so ist es für die Bedienperson schwierig, das entsprechende Betätigungselement zu identifizieren und treffsicher zu betätigen. Die Identifizierung durch die Bedienperson ist insbesondere dann schwierig, wenn die Bedienperson gleichzeitig anderweitig visuell konzentriert ist und die Bedieneinrichtung nur kurz oder nur aus dem Augenwinkel oder gar nicht während der Bedienung ansehen kann. Insbesondere ist diese Betätigung dann schwierig, wenn die Betätigungselemente in Feldern oder Tastenreihen angeordnet sind, beispielsweise als Folientasten oder andere Tasten beziehungsweise Schalter, die haptisch voneinander nicht unterscheidbar sind. Ein anderes Beispiel für derartige Betätigungselemente sind berührungsempfindliche Bildschirme, die immer größere Verbreitung finden.

Berührungsempfindliche Bildschirme finden zunehmend Einsatz in Fahrzeugen, insbesondere in Landfahrzeugen und auch in Luftfahrzeugen. Sie übernehmen dabei Funktionen, die bislang von Schaltern und Tastern zur Verfügung gestellt wurden. An Stelle eines physischen Tasters oder Schalters wird auf dem berührungsempfindlichen Bildschirm eine begrenzte Fläche definiert und dem Nutzer als Schaltfläche dargestellt. Berührt der Nutzer diese Schaltfläche, so registriert der berührungsempfindliche Bildschirm diese Berührung an diesem Ort des Bildschirms und löst dadurch eine entsprechende Schalt- oder Tastfunktion aus, die herkömmlich über den Schalter beziehungsweise Taster ausgelöst wurde.

Insbesondere für die "blinde" Bedienung eines herkömmlichen Schalters oder Tasters, das heißt eine Bedienung, bei der der Nutzer den Schalter beziehungsweise den Taster erfühlt und ihn dadurch erkennt, ohne dass er auf diesen schauen muss, waren bislang diskrete Schalter und Taster mit einer individualisierten Oberfläche oder Kontur versehen, die ein Ertasten und Identifizieren des Schalters beziehungsweise des Tasters ermöglicht hat. Derartige Gestaltungen nennt man haptische Codierungen. Solche haptischen Codierungen wurden häufig im Flugzeugbau, insbesondere in sehr schnell fliegenden Flugzeugen, eingesetzt, um es dem Piloten zu ermöglichen, bestimmte Instrumente zu bedienen, ohne dabei auf das zugehörige Bedienpanel blicken zu müssen.

Eine derartige haptische Rückmeldung erfährt der Nutzer jedoch nicht, wenn er entsprechende Schalter- beziehungsweise Tasterbetätigungen auf einem flachen berührungsempfindlichen Bildschirm durchführen muss. Die ebene Oberfläche des berührungsempfindlichen Bildschirms ermöglicht es nicht, auf ihr haptische Codierungen vorzusehen, da durch solche Maßnahmen zur Oberflächenveränderung die Eigenschaft des Bildschirms zur flexiblen Wiedergabe unterschiedlicher Betätigungsszenarien erheblich eingeschränkt werden würde.

Die vorstehende Problematik ist nicht auf Flugzeuge beschränkt, sondern kann in jedem anderen Fahrzeug (Landfahrzeug, Wasserfahrzeug, Raumfahrzeug) oder auch bei stationären Maschinen auftreten, die starken Schwingungen oder Erschütterungen ausgesetzt sind.

Aus der US 6,501,394 B1 ist eine Bedienschnittstelle für Sehbehinderte bekannt, bei der am Rand eines Bildschirms, der als berührungsempfindlicher Bildschirm ausgebildet sein kann, eine Walzeneinrichtung vorgesehen ist, die eine Mehrzahl von nebeneinander um eine gemeinsame Achse drehbaren Scheiben aufweist, die jeweils eine polygonale Querschnittsform besitzen. Diese Walzen sind daher an Bildschirm oder neben dem Bildschirm zugeordnet sind, einem Nutzer eine entsprechende Information in Blindenschrift zur Verfügung gestellt werden.

Die US 2009/0046066 A1 offenbart eine Betätigungsvorrichtung zur Maschinensteuerung mit einem Bildschirm, auf dem zwei Anzeigefenster vorgesehen sind. Jedem der Anzeigefenster ist eine Mehrzahl von Bedienknöpfen zugeordnet, die um den Bildschirm herum angeordnet sind. Diese Bedienknöpfe können auch als berührungsempfindliche Betätigungsfelder auf dem Bildschirm angeordnet sein, wenn dieser als berührungsempfindlicher Bildschirm ausgebildet ist. Eine haptische Unterscheidbarkeit der Bedienknöpfe beziehungsweise der Bedienfelder ist nicht gegeben.

Die FR 2 904 442 A1 offenbart eine Tastatur, die neben einem Bildschirm an einer Seite des Bildschirms angeordnet ist. Mittels der Tasten können Cursorbewegungen und Auswahlbefehle an den Bildschirm übergeben werden. Die einzelnen Tasten der Tastatur sind mit haptisch wahrnehmbaren Symbolen versehen.

Die US 6,655,581 B1 betrifft die Bedieneinheit eines stationären Geldautomaten, der mit einem berührungsempfindlichen Bildschirm zur Interaktion mit einer Bedienperson ausgestattet ist. Dieser berührungsempfindliche Bildschirm ist an drei Seiten von einem Rahmen umgeben, der Oberflächenabschnitte aufweist, die eine haptisch wahrnehmbare Struktur aufweisen und die jeweils einem auf dem Bildschirm angezeigten Betätigungselement zugeordnet sind. Bei dieser haptisch wahrnehmbaren Struktur handelt es sich um für den Bediener aussagekräftige Symbole, die an Stelle von oder zusätzlich zu Symbolen in Braille-Schrift vorgesehen sind. Hierdurch soll es sehbehinderten Menschen, die nicht der Braille-Schrift mächtig sind, ermöglicht werden, den Geldautomaten zu bedienen.

Es ist daher Aufgabe der vorliegenden Erfindung, eine Bedieneinrichtung mit einer Mehrzahl von neben- und/oder untereinander angeordneten Betätigungselementen, insbesondere Schaltern und/oder Tastern anzugeben, die ohne Einschränkung der Flexibilität einer solchen Bedieneinrichtung ein haptisch orientiertes Betätigen der Betätigungselemente oder anderer auf der Bedieneinrichtung vorgesehener Stellorgane zu ermöglichen.

Diese Aufgabe wird mit den Merkmalen des Anspruchs 1 gelöst.

Eine solche erfindungsgemäße Bedieneinrichtung mit einer Mehrzahl von neben- und/oder untereinander angeordneten Betätigungselementen, insbesondere Schaltern und/oder Tastern, wobei die Betätigungselemente haptisch voneinander nicht unterschiedliche Schalt- und/oder Tastflächen sind, zeichnet sich dadurch aus, dass die Mehrzahl der Betätigungselemente zumindest teilweise von zumindest einem Rahmenelement begrenzt ist und wobei das Rahmenelement zumindest bereichsweise mit Oberflächenabschnitten versehen ist, die eine haptisch wahrnehmbare Struktur aufweisen und die jeweils einem Betätigungselement zugeordnet sind, derart, dass die haptisch wahrnehmbare Struktur eine haptische Orientierung zum Betätigen der die Betätigungselemente bildenden, haptisch voneinander nicht unterscheidbaren Schalt- und/oder Tastflächen gibt.

Das Rahmenelement ist also zumindest bereichsweise mit Oberflächenabschnitten versehen, die derart geformt sind, dass sie haptisch unterscheidbar erfasst werden können, und zumindest einem Teil der haptisch unterscheidbar erfassbaren Oberflächenabschnitte ist jeweils ein Betätigungselement zugeordnet.

Das Vorsehen des zumindest bereichsweise mit haptisch unterscheidbar erfassbaren Oberflächenabschnitten ausgebildeten Rahmenelements am Rand beispielsweise einer Reihe von Betätigungselementen ermöglicht es auf einfache Weise, der nach den Betätigungselementen, beispielsweise nach den Tast- und/oder Schaltflächen, suchenden Hand eine haptische Orientierung zu geben. Sind dann die Betätigungselemente so angeordnet, dass jeweils ein Betätigungselement (Tast- und/oder Schaltfläche oder ein anderes Stellorgan) einem der haptisch erfassbaren Oberflächenabschnitte am Rahmenelement zugeordnet ist, so braucht der Nutzer nur neben dem von ihm haptisch erfassten Oberflächenabschnitt das Betätigungselement erfassen, zum Beispiel auf die Tast- oder Schaltfläche zu drücken, um die entsprechende Tast- beziehungsweise Schaltfläche zu betätigen. Dafür ist zumindest einem Teil der haptische erfassbaren Oberflächenabschnitte jeweils ein Betätigungselement zugeordnet.

Diese erfindungsgemäße Lösung ist auch deshalb vorteilhaft, weil es in vielen Fällen keines zusätzlichen Bauteils bedarf, denn eine in eine Frontplatte einer Bedieneinrichtung eingebaute Mehrzahl von Betätigungselementen ist häufig von einem Rahmen umgeben, so dass es lediglich erforderlich ist, diesen sowieso schon vorhandenen Rahmen erfindungsgemäß auszubilden.

Weitere bevorzugte und vorteilhafte Ausgestaltungsmerkmale der erfindungsgemäßen Bedieneinrichtung sind Gegenstand der Unteransprüche 2 bis 6.

Vorzugsweise ist zumindest einer der haptisch erfassbaren Oberflächenabschnitte mit einer individuellen Oberflächenstruktur versehen, die den haptisch erfassbaren Oberflächenabschnitt identifizierbar macht. Dadurch ist es dem Nutzer möglich, zwischen mehreren nebeneinander liegenden haptisch erfassbaren Oberflächenabschnitten eine Unterscheidung zu treffen. Die individuelle Oberflächenstruktur kann beispielsweise gebildet sein von einem aus der Oberfläche des Oberflächenabschnitts hervorstehenden Spitze oder Erhebung oder beispielsweise aus einer oder mehrerer parallel zueinander verlaufender Rippen.

Die Oberflächenstruktur kann sich entlang des Randes der Mehrzahl von Betätigungselementen derart wiederholen, dass beispielsweise jeder dritte oder jeder fünfte Oberflächenabschnitt dieselbe Oberflächenstruktur aufweist; mit anderen Worten: es sind zwischen den mit derselben Oberflächestruktur versehenen Oberflächenabschnitten weitere Oberflächenabschnitte vorgesehen, die eine andere Oberflächenstruktur aufweisen.

Es ist auch vorteilhaft, wenn zumindest einer der haptisch erfassbaren Oberflächenabschnitte mit einer individuell ausgebildeten Randkontur ausgebildet ist, die den haptisch erfassbaren Oberflächenabschnitt identifizierbar macht. Dieses Identifizierungsmerkmal ist somit nicht auf der Oberfläche selbst, sondern am Rand der Oberfläche vorgesehen und kann entweder unabhängig vom Identifizierungsmerkmal der individuellen Oberflächenstruktur oder zusätzlich dazu vorgesehen sein. Durch die Kombinationsmöglichkeit mit unterschiedlichen individuellen Oberflächenstrukturen und unterschiedlichen individuell erfassbaren Randkonturen kann eine Vielzahl von eindeutigen haptischen Codierungen der jeweiligen Oberflächenabschnitte gebildet werden.

Da das Rahmenelement als Halteleiste ausgebildet ist, auf der eine Bedienperson die Bedienhand abstützen kann, ist auch bei hohen auf die Bedienperson einwirkenden Beschleunigungen und Erschütterungen eine sichere und zuverlässige Bedienung möglich, da die Bedienhand mechanisch auf der vom Rahmenelement gebildeten Halteleiste abgestützt werden kann, wodurch das Risiko eines versehentlichen Berührens des Betätigungselements deutlich reduziert wird.

Besonders vorteilhaft ist diese zusätzliche Stabilisierung durch das Rahmenelement dann, wenn erfindungsgemäß die Halteleiste derart ausgebildet ist, dass sich die Bedienperson mit der Bedienhand daran auch festhalten kann. Dadurch ist es möglich, die Bedienhand mit den Fingern aktiv zu fixieren und auch während der Bedienung nur jenen Finger zu lösen, der für das Berühren des Betätigungselements erforderlich ist.

Bei einer besonders bevorzugten Ausführungsform der Erfindung sind die Betätigungselemente von Tast- und/oder Schaltflächen gebildet, die auf einem berührungsempfindlichen Bildschirm funktional dargestellt sind. Eine solche erfindungsgemäße Bedieneinrichtung mit einem berührungsempfindlichen Bildschirm sowie einer zugehörigen Steuereinrichtung für den berührungsempfindlichen Bildschirm, mittels der Tast- und/oder Schaltflächen auf dem berührungsempfindlichen Bildschirm funktional darstellbar sind, ist vorzugsweise so ausgebildet, dass der berührungsempfindliche Bildschirm zumindest teilweise von zumindest einem Rahmenelement begrenzt ist, wobei das Rahmenelement zumindest bereichsweise mit Oberflächenabschnitten versehen ist, die derart geformt sind, dass sie haptisch erfasst werden können. Dabei ist zumindest einem Teil der haptisch erfassbaren Oberflächenabschnitte jeweils eine Tast- und/oder Schaltfläche auf dem berührungsempfindlichen Bildschirm zugeordnet.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

Es zeigt:

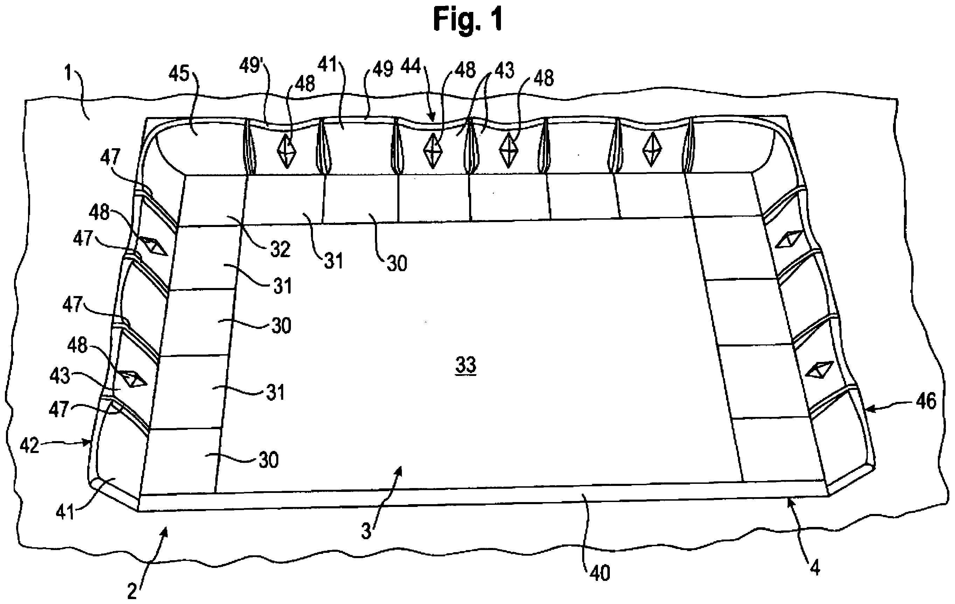

Fig. 1 eine perspektivische Ansicht einer beispielhaften Ausführungsform einer erfindungsgemäßen Bedieneinrichtung mit einem

Bei einer besonders bevorzugten Ausführungsform der Erfindung sind die Betätigungselemente von Tast- und/oder Schaltflächen gebildet, die auf einem berührungsempfindlichen Bildschirm funktional dargestellt sind. Eine solche erfindungsgemäße Bedieneinrichtung mit einem berührungsempfindlichen Bildschirm sowie einer zugehörigen Steuereinrichtung für den berührungsempfindlichen Bildschirm, mittels der Tast- und/oder Schaltflächen auf dem berührungsempfindlichen Bildschirm funktional darstellbar sind, ist vorzugsweise so ausgebildet, dass der berührungsempfindliche Bildschirm zumindest teilweise von zumindest einem Rahmenelement begrenzt ist, wobei das Rahmenelement zumindest bereichsweise mit Oberflächenabschnitten versehen ist, die derart geformt sind, dass sie haptisch erfasst werden können. Dabei ist zumindest einem Teil der haptisch erfassbaren Oberflächenabschnitte jeweils eine Tast- und/oder Schaltfläche auf dem berührungsempfindlichen Bildschirm zugeordnet.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

Es zeigt:
- Fig. 1: eine perspektivische Ansicht einer beispielhaften Ausführungsform einer erfindungsgemäßen Bedieneinrichtung mit einem berührungsempfindlichen Bildschirm, der an drei Seiten von einem erfindungsgemäß ausgebildeten Rahmenelement umgeben ist.

Fig. 1 zeigt einen Ausschnitt aus einer Armaturentafel 1 beispielsweise eines Luftfahrzeugs. In der Armaturentafel 1 ist eine Bedieneinrichtung 2 mit einem berührungsempfindlichen Bildschirm 3 vorgesehen. Der berührungsempfindliche Bildschirm 3 ist von einem Rahmen 4 umgeben, der mit der Armaturentafel 1 verbunden ist. Der Rahmen 4 weist im gezeigten Beispiel ein erstes Rahmenelement 40 auf, das wulstartig geringfügig aus der Oberfläche der Armaturentafel 1 hervorsteht und an einer Seitenkante des berührungsempfindlichen Bildschirms 3 verläuft. Die anderen drei Seitenkanten des berührungsempfindlichen Bildschirms 3 sind von Rahmenelementen 42, 44, 46 des Rahmens 4 begrenzt, die weiter aus der Armaturentafel 1 hervorstehen, als das erste Rahmenelement 40. Diese drei Rahmenelemente 42, 44, 46 bilden aufgrund ihrer größeren Höhe Halteleisten, an welchen sich eine Hand einer Bedienperson abstützen kann.

Der berührungsempfindliche Bildschirm 3 wird in allgemein bekannter Weise von einer - nicht gezeigten - Steuerungseinrichtung derart beaufschlagt, dass unter Anderem Tast- und/oder Schaltflächen 30, 31, 32 als Betätigungselemente entlang des Randes des berührungsempfindlichen Bildschirms 3 auf diesem angezeigt und funktional dargestellt sind. Der mittlere Bereich 33 des berührungsempfindlichen Bildschirms 3 steht dabei für andere Anzeigezwecke zur Verfügung.

Wie in Fig. 1 zu erkennen ist, sind die drei als Halteleisten ausgebildeten Rahmenelemente 42, 44, 46 des Rahmens 4 auf ihrer zum berührungsempfindlichen Bildschirm 3 weisenden Oberflächenseite mit unterschiedlich ausgeprägten Oberflächenabschnitten 41, 43, 45 versehen. Diese Oberflächenabschnitte 41, 43, 45 sind jeweils als muldenartige Vertiefung konkav ausgebildet und bilden auf diese Weise jeweils einen haptisch erfassbaren Oberflächenabschnitt. Zwischen diesen haptisch erfassbaren Oberflächenabschnitten 41, 43, 45 ist jeweils ein rippenartig aus der Oberfläche hervorstehender Steg 47 vorgesehen, der die haptisch erfassbaren Oberflächenabschnitte deutlich spürbar voreinander trennt.

Die haptisch erfassbaren Oberflächenabschnitte 41, 43, 45 sind unterschiedlich ausgebildet. Während die erste Gruppe haptisch erfassbarer Oberflächenabschnitte 41 lediglich eine muldenartige konkave Vertiefung aufweist, ist eine zweite Gruppe haptisch erfassbarer Oberflächenabschnitte 43 mit einer aus der muldenartigen Vertiefung hervorstehenden rombusartigen Nase 48 versehen, die eine deutlich fühlbare haptische Unterscheidung der Oberflächenabschnitte 43 von den Oberflächenabschnitte 41 ermöglicht. Eine weitere Gruppe der haptisch erfassbaren Oberflächenabschnitte bilden die Eckabschnitte 45, die lediglich muldenartig vertieft sind, aber aufgrund ihrer Eckstruktur ebenfalls eindeutig haptisch erfassbar sind.

Wie in Fig. 1 zu erkennen ist, wechseln sich die nur muldenartig ausgebildeten haptisch erfassbaren Oberflächenabschnitte 41 mit den haptisch erfassbaren Oberflächenabschnitt 43 ab, die mit der rombusartigen Nase 48 versehen sind. Lediglich an der langen Seite des berührungsempfindlichen Bildschirm 3 treffen in der Mitte zwei mit einer rombusartigen Nase 48 versehene Oberflächenabschnitte 43 aufeinander und liegen dort unmittelbar nebeneinander, was der Bedienperson eine zusätzliche haptische Orientierung ermöglicht.

Die obere Kante der als Halteelement mit haptisch erfassbaren Oberflächenabschnitten ausgebildeten Rahmenelemente 42, 44, 46 ist mit einer wellenartigen Formgebung versehen, wobei jeweils ein Wellenberg 49 einem lediglich mit der muldenartigen Vertiefung versehenen Oberflächenabschnitt 41 zugeordnet ist und wobei jeweils ein Wellental 49' einem mit der rombusartigen Nase 48 versehenen Oberflächenabschnitt 43 zugeordnet ist. Auf diese Weise ist es einer Bedienperson auch möglich, durch Abfahren des Randes des Rahmens 4 mit den Fingern eine haptische Orientierung zu gewinnen.

Die Steuerungseinrichtung für den berührungsempfindlichen Bildschirm 3 bewirkt, dass die am Rand des berührungsempfindlichen Bildschirms 3 funktional dargestellten Tast- und/oder Schaltflächen 30, 31, 32 so am Rand des Bildschirms 3 platziert sind, dass jeweils eine der Schaltflächen 30, 31, 32 einem der haptisch erfassbaren Oberflächenabschnitte 41, 43, 45 zugeordnet ist.

Es ist auf diese Weise dem Benutzer möglich, sich am Rahmenelement 42, 44, 46 haptisch zu orientieren, um dann unmittelbar neben dem haptisch identifizierten Oberflächenabschnitt 41, 43, 45 die zugeordnete Tast- und/oder Schaltfläche 30, 31, 32 zu betätigen.

Die Beschreibung der Erfindung anhand von auf einem berührungsempfindlichen Bildschirm ausgebildeten Tast- und/oder Schaltflächen stellt lediglich eine beispielhafte Ausführungsform dar. Grundsätzlich können die Betätigungselemente nebeneinander oder untereinander beispielsweise in einer Reihe oder entlang einer gekrümmten Kurve angeordnet sein. Entscheidend ist, dass sich der Rahmen mit den haptisch codierten Rahmenelementen entlang dieser Mehrzahl von Betätigungselementen erstreckt und deren geometrischer Anordnung folgt, so dass unmittelbar neben jedem haptisch codierten Oberflächenabschnitt des Rahmens ein Betätigungselement gelegen ist.

### Bezugszeichenliste

Es bezeichnen:
- 1: Armaturentafel
- 2: Bedieneinrichtung
- 3: berührungsempfindlicher Bildschirm
- 4: Rahmen
- 30: Betätigungselement (Tast- und/oder Schaltfläche)
- 31: Betätigungselement (Tast- und/oder Schaltfläche)
- 32: Betätigungselement (Tast- und/oder Schaltfläche)
- 33: mittlerer Bereich des berührungsempfindlichen Bildschirms
- 40: erstes Rahmenelement
- 41: Oberflächenabschnitt
- 42: Rahmenelement
- 43: Oberflächenabschnitt
- 44: Rahmenelement
- 45: Oberflächenabschnitt
- 46: Rahmenelement
- 47: rippenartig hervorstehender Steg
- 48: rombusartige Nase
- 49: Wellenberg
- 49': Wellental

## Patentansprüche

1. Bedieneinrichtung (2) zum Einsatz in einer Armaturentafel (1) mit einer Mehrzahl von neben- und/oder untereinander angeordneten Betätigungselementen (30, 31, 32), insbesondere Schaltern und/oder Tastern;
- wobei die Betätigungselemente (30, 31, 32) haptisch voneinander nicht unterscheidbare Schalt- und/oder Tastflächen sind;
- wobei die Mehrzahl von Betätigungselementen (30, 31, 32) zumindest teilweise von zumindest einem Rahmenelement (42, 44, 46) begrenzt ist;
- wobei das Rahmenelement (42, 44, 46) zumindest bereichsweise mit Oberflächenabschnitten (41, 43, 45) versehen ist, die eine haptisch wahrnehmbare Struktur (48, 49, 49') aufweisen und die jeweils einem Betätigungselement (31, 31, 32) zugeordnet sind, derart, dass die haptisch wahrnehmbare Struktur (48, 49, 49') eine haptische Orientierung zum Betätigen der die Betätigungselemente (30, 31, 32) bildenden, haptisch voneinander nicht unterscheidbaren Schalt- und/oder Tastflächen gibt,
**dadurch gekennzeichnet,**
- **dass** das Rahmenelement (42, 44, 46) als Halteleiste ausgebildet ist, die aus der Armaturentafel (1) so weit hervorsteht, dass eine Bedienperson die Bedienhand während der Bedienung an dem Rahmenelement (42, 44, 46) abstützen kann und dass sich die Bedienperson mit der Bedienhand während der Bedienung an dem Rahmenelement (42, 44, 46) festhalten kann.

2. Bedieneinrichtung (2) nach Anspruch 1,
**dadurch gekennzeichnet,**
**dass** zumindest einer der haptisch erfassbaren Oberflächenabschnitte (41, 43, 45) mit einer individuellen Oberflächenstruktur (48) versehen ist, die den haptisch erfassbaren Oberflächenabschnitt (43) identifizierbar macht.

3. Bedieneinrichtung (2) nach Anspruch 1 oder 2,
**dadurch gekennzeichnet,**
**dass** zumindest einer der haptisch erfassbaren Oberflächenabschnitte (41, 43) mit einer individuell ausgebildeten Randkontur (49, 49') ausgebildet ist, die den haptisch erfassbaren Oberflächenabschnitt (41, 43) identifizierbar macht.

4. Bedieneinrichtung (2) nach Anspruch 3,
**dadurch gekennzeichnet,**
**dass** die individuell ausgebildete Randkontur (49, 49') durch eine wellenartige Formgebung der oberen Kante des als Halteelement mit haptisch erfassbaren Oberflächenabschnitten ausgebildeten Rahmenelements (42, 44, 46) gebildet ist.

5. Bedieneinrichtung (2) nach einem der Ansprüche 1 bis 4 mit einem berührungsempfindlichen Bildschirm,
**dadurch gekennzeichnet,**
**dass** die Betätigungselemente (30, 31, 32) von Tast- und/oder Schaltflächen gebildet sind, die auf dem berührungsempfindlichen Bildschirm (3) funktional dargestellt sind.

6. Bedieneinrichtung (2) nach Anspruch 5,
**dadurch gekennzeichnet,**
**dass** ein erstes Rahmenelement (40) wulstartig geringfügig aus der Oberfläche der Armaturentafel (1) hervorsteht und an einer Seitenkante des Bildschirms (3) verläuft, wobei die anderen drei Seitenkanten des Bildschirms (3) von Rahmenelementen (42, 44, 46) begrenzt sind, die weiter aus der Armaturentafel (1) hervorstehen als das erste Rahmenelement (40).

## Claims

1. Operator control device (2) for use in an instrument panel (1) comprising a plurality of operating elements (30, 31, 32), in particular switches and/or pushbuttons, which are arranged next to one another and/or one beneath the other;
- wherein the operating elements (30, 31, 32) are switch and/or touch areas which cannot be haptically distinguished from one another;
- wherein the plurality of operating elements (30, 31, 32) are at least partially delimited by at least one frame element (42, 44, 46);
- wherein the frame element (42, 44, 46) is provided, at least in regions, with surface sections (41, 43, 45) which have an haptically perceptible structure (48, 49, 49') and which are each associated with an operating element (31, 31, 32) in such a way that the haptically perceptible structure (48, 49, 49') provides a haptic orientation for operating the switch and/or touch areas which form the operating elements (30, 31, 32) and cannot be haptically distinguished from one another, **characterized**
- **in that** the frame element (42, 44, 46) is in the form of a retaining strip which protrudes so far out of the instrument panel (1) that an operator can support his operating hand on the frame element (42, 44, 46) during the operator control process and that the operator can firmly hold onto the frame element (42, 44, 46) with his operating hand during the operator control process.

2. Operator control device (2) according to Claim 1,
**Characterized in that** at least one of the haptically detectable surface sections (41, 43, 45) is provided with an individual surface structure (48) which makes the haptically detectable surface section (43) identifiable.

3. Operator control device (2) according to Claim 1 or 2,
**characterized in that** at least one of the haptically detectable surface sections (41, 43) is designed with an individually designed edge contour (49, 49') which makes the haptically detectable surface section (41, 43) identifiable.

4. Operator control device (2) according to Claim 3,
**characterized in that** the individually designed edge contour (49, 49') is formed by corrugated shaping of the upper edge of the frame element (42, 44, 46) which is designed as a holding element with haptically detectable surface sections.

5. Operator control device (2) according to one of Claims 1 to 4 comprising a touch-sensitive screen,
**characterized in that** the operating elements (30, 31, 32) are formed by touch and/or switch areas which are functionally displayed on the touch-sensitive screen (3).

6. Operator control device (2) according to Claim 5,
**characterized in that** a first frame element (40) protrudes, in the manner of a bead, slightly out of the surface of the instrument panel (1) and runs on a side edge of the screen (3), wherein the other three side edges of the screen (3) are delimited by frame elements (42, 44, 46) which protrude further out of the instrument panel (1) than the first frame element (40).

## Revendications

1. Dispositif de commande (2) destiné à être utilisé dans un tableau de bord (1), comprenant une pluralité d'éléments d'actionnement (30, 31, 32) disposés les uns à côté des autres et/ou les uns au-dessus des autres, notamment des commutateurs et/ou des touches ;
- les éléments d'actionnement (30, 31, 32) étant des surfaces de commutation et/ou tactiles non différentiables au toucher les unes des autres ;
- la pluralité d'éléments d'actionnement (30, 31, 32) étant au moins partiellement délimitée par au moins un élément formant cadre (42, 44, 46) ;
- l'élément formant cadre (42, 44, 46) étant au moins partiellement pourvu de portions de surface (41, 43, 45) qui possèdent une structure (48, 49, 49') perceptible au toucher et qui sont respectivement associées à un élément d'actionnement (31, 31, 32), de telle sorte que la structure (48, 49, 49') perceptible au toucher donne une orientation haptique pour l'actionnement des surfaces de commutation et/ou tactiles non différentiables au toucher les unes des autres formant les éléments d'actionnement (30, 31, 32),
**caractérisé en ce**
- **que** l'élément formant cadre (42, 44, 46) est réalisé sous la forme d'une baguette de maintien qui fait saillie hors du tableau de bord (1) suffisamment loin pour qu'un opérateur puisse appuyer la main de commande au niveau de l'élément formant cadre (42, 44, 46) pendant l'utilisation et que l'opérateur puisse se enir à l'élément formant cadre (42, 44, 46) avec la main de commande pendant l'utilisation.

2. Dispositif de commande (2) selon la revendication 1, **caractérisé en ce qu'**au moins l'une des portions de surface (41, 43, 45) perceptibles au toucher est pourvue d'une structure de surface (48) individuelle qui rend la portion de surface (43) perceptible au toucher identifiable.

3. Dispositif de commande (2) selon la revendication 1 ou 2, **caractérisé en ce qu'**au moins l'une des portions de surface (41, 43) perceptibles au toucher est réalisée avec un contour de bordure (49, 49') configuré individuellement qui rend la portion de surface (41, 43) perceptible au toucher identifiable.

4. Dispositif de commande (2) selon la revendication 3, **caractérisé en ce que** le contour de bordure (49, 49') configuré individuellement est formé par un façonnage ondulé du bord supérieur de l'élément formant cadre (42, 44, 46) réalisé en tant qu'élément de maintien avec des portions de surface perceptibles au toucher.

5. Dispositif de commande (2) selon l'une des revendications 1 à 4 comprenant un écran tactile, **caractérisé en ce que** les éléments d'actionnement (30, 31, 32) sont formés par des surfaces tactiles et/ou de commutation qui sont représentées fonctionnellement sur l'écran tactile (3).

6. Dispositif de commande (2) selon la revendication 5, **caractérisé en ce qu'**un premier élément formant cadre (40) fait saillie à la manière d'un bourrelet hors de la surface du tableau de bord (1) et s'étend au niveau d'un bord latéral de l'écran (3), les trois autres bords latéraux de l'écran (3) étant délimités par des éléments formant cadre (42, 44, 46) qui font saillie plus loin hors du tableau de bord (1) que le premier élément formant cadre (40).
